# EUROPEAN PATENT APPLICATION

(11) **EP 1 251 293 A2**
(43) Date of publication of application: **23.10.2002**
(21) Application number: 02008636.9
(22) Date of filing: 17.04.2002
(51) Int. Cl.: F16H 47/02

(54) **Hydrostatic transaxle**

(30) Priority: 17.04.2001 US 284346 P; 07.05.2001 US 289098 P
(71) Applicant: TECUMSEH PRODUCTS COMPANY, Tecumseh Michigan 49286 (US)
(72) Inventor: Boyer, Scott G., Borden, Indiana 47106 (US); Johnson, Kevin L., Douglas, Georgia 31533 (US); McDonner, Orville R., Salem, Indiana 47167 (US); Ruebusch, Richard T., New Albany, Indiana 47150 (US)
(74) Representative: Weitzel, Wolfgang, Dr.-Ing.

(57) **Abstract**

A hydrostatic transaxle having a hydrostatic transmission module (104) including a transmission housing (110), a rotating fluid pump and a rotatable fluid motor, the pump being of variable displacement, the motor being rotated at various speeds and in forward and reverse directions in response to changes in pump displacement; an axle drive unit (48) including a housing (80) and a speed reduction gear train having an input and an output disposed in the axle drive housing (80), the motor being operably coupled to the gear train input; a differential assembly (50) having a rotating casing (52), the rotating casing (52) being external to the transmission housing (110) and axle drive unit housing (80); and a pair of axles (44,46) extending from the differential assembly casing (52).

## Description

### CROSS-REFERENCE TO RELATED APPLICATION

This application claims the benefit under 35 U.S.C. § 199(e) of United States Provisional Application No. 60/284,346 filed on April 17, 2001 and of United States Provisional Application No. 60/289,098 filed on May 7, 2001.

### BACKGROUND OF THE INVENTION

### 1. Field of Invention

The present invention relates to hydrostatic transaxles intended primarily for use in the lawn and garden industry on lawn and garden tractors, and riding lawnmowers, including lawnmowers of the zero turn radius variety which are steered by controlling the speed and direction of their ground-engaging drive wheels.

### 2. Description of the Related Art

Hydrostatic transaxles are well-known in the art for driving lawn and garden tractors. These transaxles comprise a positive displacement fluid pump driven at a constant speed by an engine, a fluid motor in fluid communication with the rotating pump and driven thereby in forward and reverse directions at various speeds. Fluid is pumped by the pump to the motor along one of two conduits, the chosen conduit determining the direction of rotation of the pump; the fluid which powers the pump may be returned to the pump via the other conduit. The speed and direction of rotation of the motor is controlled by varying the displacement of the pump, for example by pivotally adjusting a swash plate assembly which affects the stroke of an axial piston pump, the stroke being zero in a neutral position, and at a maximum value at a full forward or reverse position, depending on which way the swash plate assembly is tilted.

The rotatable fluid motor is provided with an output shaft which, in tractor applications, is commonly coupled to a speed reduction gear train including a differential assembly through which two drive wheels are rotated, sometimes at different speeds. Often, the pump, motor, gear train (including the differential assembly) and the axles are contained in a common housing. This housing can be quite complex, and if more than one transaxle design is being manufactured, accommodating the various designs can be quite expensive, especially with regards to tooling the cast housing.

It is known in the art to provide a hydrostatic transmission module, in which a fluid pump and motor are located in a common housing, which is connected to a separate axle drive assembly housing in which a speed reducing gear train, and axle(s) driven thereby, are disposed, the gear train being coupled to the output shaft of the fluid motor. For tractor applications, the axle drive assembly housing may also include a differential assembly to which the axles are operably coupled. The hydrostatic transmission module and axle drive assembly are attached together and shipped as a unit to a tractor or mower manufacturer. Further, the hydrostatic transmission module may be quickly and easily replaced, perhaps without removal of the axle drive assembly from the tractor, in the event of a hydrostatic component failure.

Examples of such hydrostatic transmission modules, and hydrostatic transaxles comprising such modules, are described in U.S. Patent No. 6,301,885 B1 issued on October 16, 2001, pending U.S. Patent Applications Serial No. 09/498,692, filed February 7, 2000, and 09/671,796, filed September 27, 2000, all of which are assigned to Tecumseh Products Company, the disclosures of which are each expressly incorporated herein by reference. Notably, the hydrostatic transmission module may be employed in applications which do not utilize the axle drive assembly, and thus its manufacturing expenditures (e.g., tooling costs) may be allocated over a much larger volume than the axle drive assembly.

Further, there is a demand in the marketplace for less expensive lawn and garden tractors having "automatic" transmissions or transaxles which do not require manual shifting between gears. These inexpensive tractors typically comprise a manual shift transmission having hand-selected forward, neutral and reverse gears, with speed control provided by tensioning, and changing the position of a drive belt running on engine and transmission pulleys of varying pitch diameters; corresponding changes in the radial positions of the belt on these pulleys changes the drive ratio between the pulleys, and consequently the ground speed of the tractor. While such transaxles may include differential assemblies, appear to provide some of the apparent features of hydrostatic transmissions, and are comparatively cheaper, they are also comparatively lacking in quality and durability. Compared to these inferior belt-driven, "variator" transmissions, hydrostatic transmissions require no clutching of belt tensioners, are infinitely variable, longer lasting, faster and quieter, and require only a foot pedal to operate.

Further still, there is a demand for more space-efficient power train system which can be easily packaged. A problem with some previous transaxles is that their axle drive assembly housings are rather large, and may not fit the available package space of a tractor.

It is thus desirable to provide a compact, cost-reduced hydrostatic transaxle equipped with a differential assembly to provide the above advantages for approximately the same cost as a variator transmission.

Moreover, zero turn radius mowers have long been favored by landscape maintenance professionals for their high level of maneuverability; mowers of this type may be turned in place through 360°, allowing faster lawn cutting times. These mowers are provided with a pair of reversible drive wheels, one on each side of the mower, which are independently controlled. Each wheel is driven by a separate fluid motor. Each motor is driven by a separate, positive displacement fluid pump and there are gear reduction means between the motor and the wheel. A pump and a motor are paired, and the speed and direction of rotation of each wheel motor is individually controlled by altering the displacement of its associated pump and selecting which of two conduits fluid flows from the pump to its associated motor. Rotation of the drive wheels in opposite directions at and common speeds will spin the mower in place relative to the ground, thereby providing a zero turn radius.

From a packaging standpoint, it is preferable to provide the pump and motor of each pair in a compact, single housing, the housing also providing a fluid reservoir or sump to provide the pump with any needed fluid. It is known in the art to provide hydrostatic axle drive units having housings in which a fluid pump and motor pair are packaged with gear reduction means and a portion of an axle shaft in a common housing. One example of such an axle drive is Model 310-1400 IZT (Integrated Zero-Turn) transaxle manufactured by Hydro-Gear of Sullivan, Illinois. One IZT transaxle unit is attached to each side of the mower, and drives one of the two drive wheels. The housings of these axle drive unit housings are complex castings, and add considerably to the cost of these units.

It is desirable to provide a hydrostatic transaxle for zero turn radius mowers which substantially shares components with other types of transaxles, thereby providing a comparatively means for driving such mowers.

### SUMMARY OF THE INVENTION

The present invention provides a hydrostatic transaxle having a hydrostatic transmission module including a transmission housing, a rotating fluid pump and a rotatable fluid motor, the pump being of variable displacement, the motor being rotated at various speeds and in the forward and the reverse directions in response to changes in pump displacement; an axle drive unit including a housing and a speed reduction gear train having an input and an output disposed in the axle drive housing, the motor being operably coupled to the gear train input; a differential assembly having a rotating casing, the rotating casing being external to the transmission housing and axle drive unit housing; and a pair of axles extending from the differential assembly casing.

The present invention also provides a hydrostatic transaxle for a zero turn radius mower, having first and second hydrostatic transmission modules each including a transmission housing, a rotating fluid pump and a rotatable fluid motor, each of the pumps being of variable displacement, each of the motors being rotated at various speeds and in the forward and the reverse directions in response to changes in pump displacement; first and second axle drive units each including a housing and a speed reduction gear train having an input and an output disposed in the axle drive housing, the first hydrostatic transmission module motor being operably coupled to the first axle drive unit gear train input, the second hydrostatic transmission module motor being operably coupled to the second axle drive unit gear train input; and the first axle being operably coupled to the first gear train output, the second axle being operably coupled to the second gear train output, the first and second axles respectively extending through the first and second axle drive unit housings.

The present invention provides a first, differential-equipped transaxle providing all of the advantages of a hydrostatic transmission at a cost comparable with variator lawn tractor transmissions, and a second, compact transaxle for zero turn radius mowers which substantially shares components with the first transaxle, and is comparatively inexpensive vis-a-vis prior zero turn radius mower hydrostatic transmissions.

### BRIEF DESCRIPTION OF THE DRAWINGS

The above mentioned and other features and objects of this invention, and the manner of attaining them, will become more apparent and the invention itself will be better understood by reference to the following description of embodiments of the invention taken in conjunction with the accompanying drawings, wherein:

Figure 1 is a perspective view of a first embodiment, differential-equipped transaxle according to the present invention, shown installed in a tractor;

Figure 2 is another perspective view of the transaxle of Figure 1;

Figure 3 is a plan view of the transaxle of Figure 1, also showing a ground-engaging drive wheel of the tractor;

Figure 4 is a bottom view of the transaxle of Figure 1;

Figure 5 is a rear view of the transaxle of Figure 1, along line 5-5 of Figure 3;

Figure 6 is a front view of the transaxle of Figure 1, along line 6-6 of Figure 3;

Figure 7 is a left-side view of the transaxle of Figure 1, along line 7-7 of Figure 3;

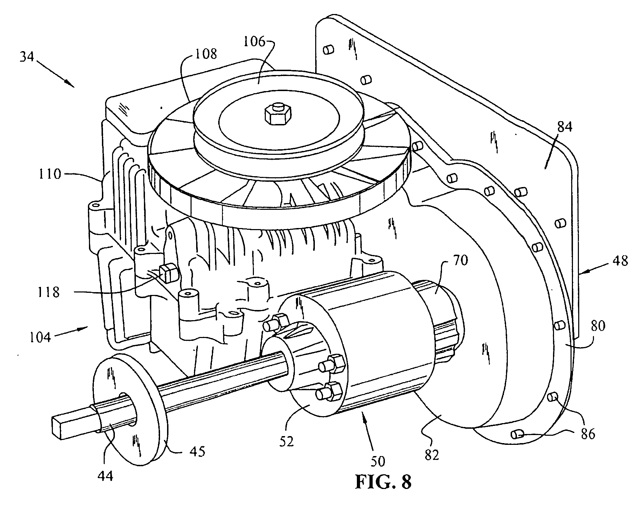

Figure 8 is a perspective view of the transaxle of Figure 1, shown uninstalled;

Figure 9 is a perspective view of the axle drive unit and differential of the transaxle of Figure 8, without its hydrostatic transmission module;

Figure 10 is another perspective view of the axle drive unit of Figure 9, with a portion of the axle drive unit housing removed;

Figure 11 is a perspective view of the axle drive unit and differential of the transaxle of Figure 8, with the entire axle drive unit housing removed;

Figure 12 is a fragmentary sectional view of the differential unit of the transaxle of Figure 1;

Figure 13 is an enlarged perspective view of the flange which operably connects the output of the axle drive unit with the rotating differential unit casing in the transaxle of Figure 1;

Figure 14 is a perspective view of the gear train within the axle drive unit of the transaxle of Figure 1;

Figure 15 is a plan view of a second embodiment transaxle according to the present invention, shown installed in a zero turn radius mower having ground-engaging wheels;

Figure 16 is a front view of the transaxle of Figure 15, along line 16-16; and

Figure 17 is a bottom view of the transaxle of Figure 15.

Figure 18 is a perspective view of a parking brake mechanism.

Figure 19 is an exploded perspective view of a third embodiment transaxle according to the present invention, shown as a installable module on a zero turn radius mower.

Figure 20 is a perspective view of the embodiment shown in Figure 19.

Figure 21 is a perspective view of an alternative embodiment of the transaxle according to the present invention, shown as a subassembly for a tractor.

Figure 22 is a perspective view of the embodiment shown in Figure 21.

Figure 23 is a perspective view of an alternative embodiment of either the second or the third embodiment shown above, having modified axle drive means.

Corresponding reference characters indicate corresponding parts throughout the several views. Although the drawings represent embodiments of the present invention, the drawings are not necessarily to scale and certain features may be exaggerated in order to better illustrate and explain the present invention. The exemplifications set out herein illustrate particular embodiments of the invention, and such exemplifications are not to be construed as limiting the scope of the invention in any manner.

### DETAILED DESCRIPTION OF THE INVENTION

While this invention has been described as having exemplary designs, the present invention may be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains.

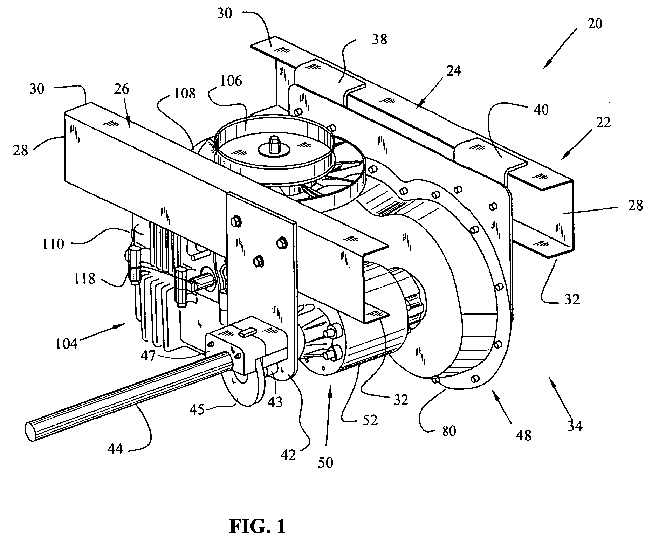

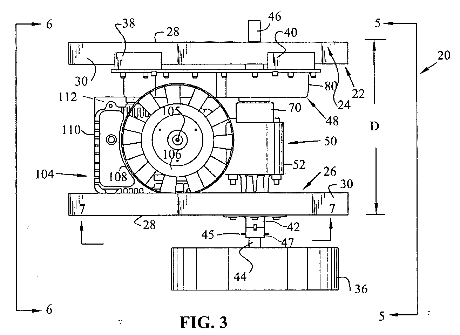

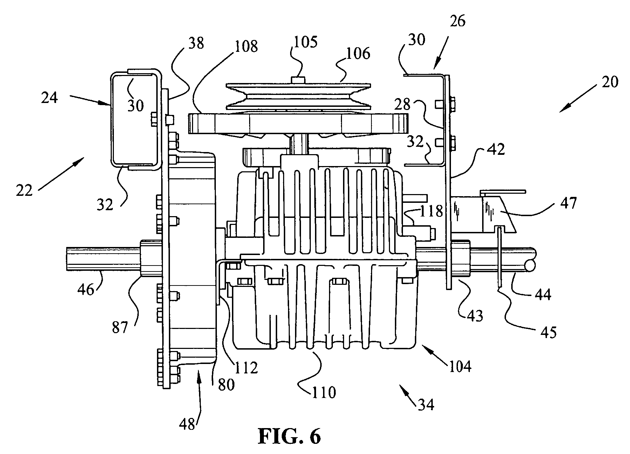

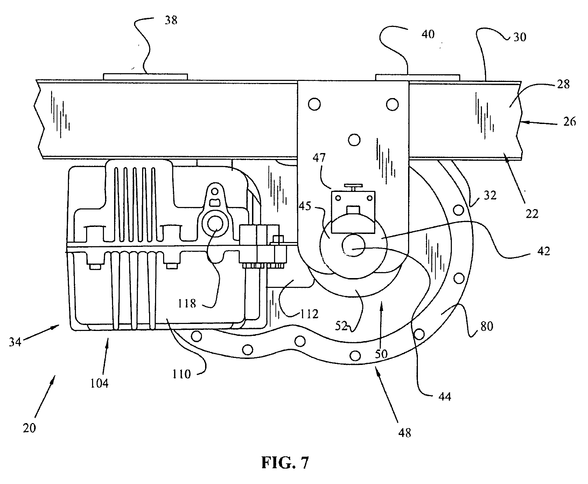

Referring to Figures 1-7 there is shown tractor or riding lawnmower 20 comprising frame 22 which has right hand frame rail 24 and left hand frame rail 26. Each of frame rails 24 and 26 is substantially C-shaped and has central web 28 and upper and lower flanges 30 and 32, respectively. Frame 22 may be formed of sheet metal or steel plate. Tractor 20 further comprises transaxle assembly 34 according to the present invention. Transaxle 34 provides driving power from the engine of the tractor (not shown) to ground-engaging drive wheels 36, one of which is shown in Figure 3. Ground engaging wheels 36 may be up to 18 inches in outside diameter.

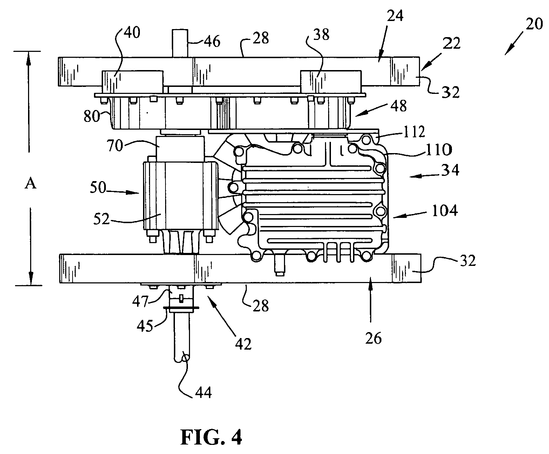

Referring to Figures 3 and 4, it can be seen that webs 28 of left hand and right hand frame rails 24 and 26 are separated by distance D, which may be as small as 11 inches. Thus, the inventive transaxle may be accommodated between frame rails which are relatively closely spaced and provide a smaller package vis-a-vis previous differential-equipped hydrostatic transaxles.

The right hand frame rail 24 of tractor 20 is provided with C-shaped forward and aft brackets, 38 and 40, respectively. Brackets 38 and 40 may also be formed of sheet metal or steel plate. Brackets 38 and 40 may be attached to right hand frame rail 24 in any convenient fashion, such as welding or bolting for example. Planar bearing member 42 is bolted or welded to web 28 of left hand frame rail 26. Bearing member 42 includes bearing 43 which rotatably supports left hand axle 44. Further, it should be noted in alternative embodiments, as described below, transaxle 34 may be a self contained unit, being sub-assembled separately from mower 20 and installed easily at a later time.

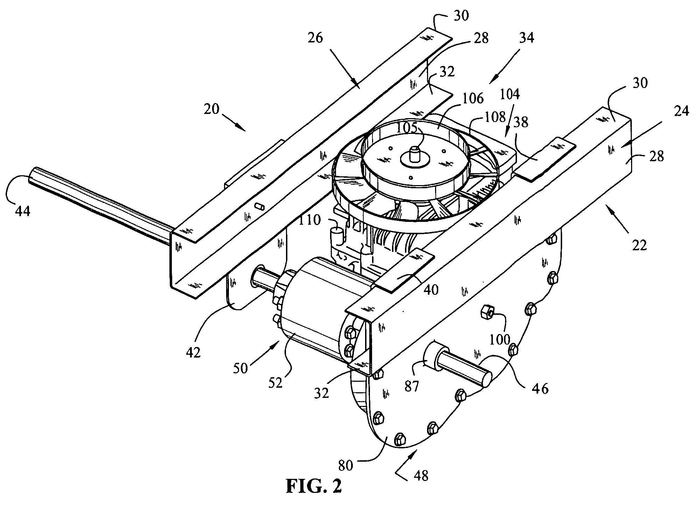

Left hand axle 44, as shown in Figures 2-6, has rotatably fixed thereto brake disc 45. Brake disc 45 may be allowed some axial movement along left hand axle as necessary, comprising part of a brake assembly 47 of any suitable type, such as that disclosed in either of U.S. Patent Applications Serial Nos. 09/409,946, filed September 30, 1999, and 09/512,161, filed February 24, 2000, both assigned to Tecumseh Products Company, the disclosures of which are each expressly incorporated by reference herein. Alternatively, brake assembly 47 may be mounted to second housing portion 82 with brake disc being fixed to output shaft of hydrostatic transmission module 104, as is shown in Figure XX, and described below.

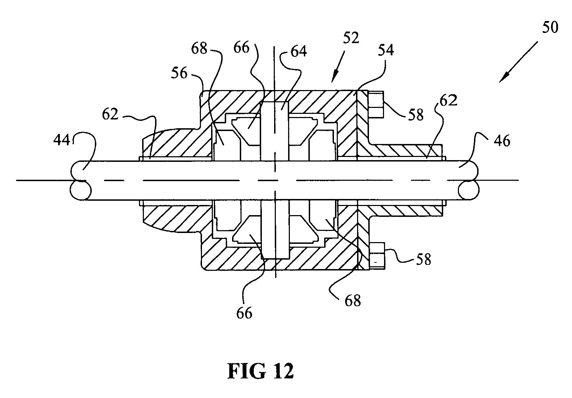

Right hand axle 46 is rotatably supported within axle drive unit 48 which is attached to forward and aft brackets 38 and 40 as described further herein below. Left and right hand axles 44 and 46 are joined together through differential assembly 50, which is best shown in Figure 12. Differential assembly 50 is of a type well-known in the art and is commercially available as a Series 100 Differential Assembly from Tecumseh Products Company. Referring to Figure 12, it can be seen that differential assembly 50 comprises rotating casing 52 which has first casing portion 54 and second casing portion 56 which are joined together by a plurality of bolts 58 and a plurality of nuts 60 as is well known in the art. Each of the first and second differential assembly casing portions is provided with bearing elements 62 which radially support the left hand and the right hand axles 44 and 46. Cross pin 64 extends diagonally across the interior of rotating casing 52, and has pinion gears 66 rotatably disposed thereabout. Pinion gears 66 are intermeshed with a pair of side gears 68 which are splined to the left hand and the right hand axles, 44 and 46, in a manner well known in the art.

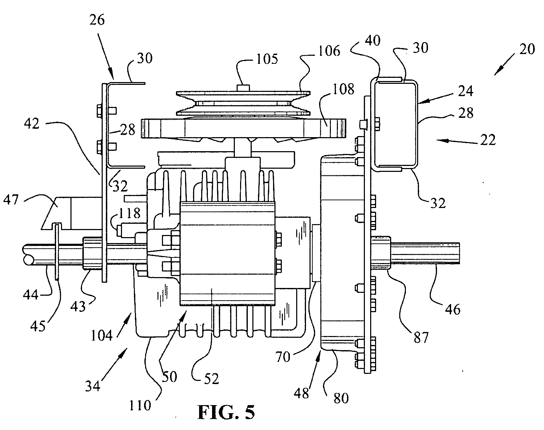

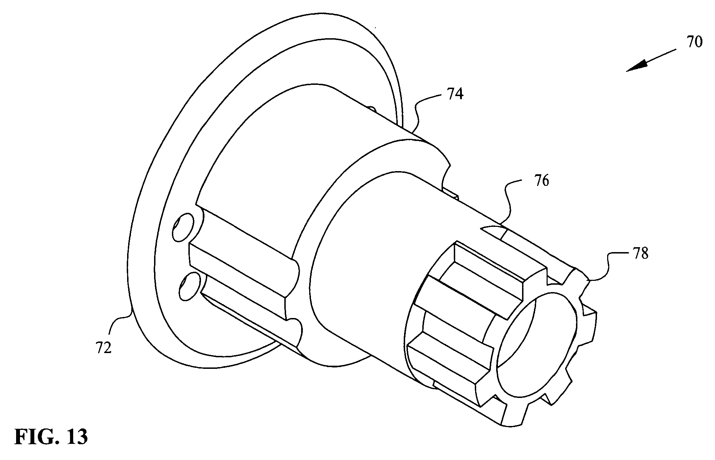

Attached to first casing portion 54 is casing-driving flange 70, which is best shown in Figure 13. Referring to Figure 13, it can be seen that flange 70, which may be a sintered powdered metal part, has annular portion 72, central portion 74, and reduced diameter portion 76. The free end of reduced diameter portion 76 is provided with external splines 78. Flange 70 is attached to the casing 52 via a plurality of bolts through openings present in annular portion 72. Bolts 58 may be used to attached flange 70 and casing 52, in addition to joining together first casing portion 54 and second casing portion 56. Referring to Figures 3 and 5, it can clearly be seen that reduced diameter portion 76 extends into housing 80 of grease-filled axle drive unit 48. The annular interface between reduced diameter portion 76 of flange 70 and first housing portion 82 of axle drive unit housing 80 may be provided with a lip seal (not shown) to prevent grease from leaking from housing 80 along the outer surface of the reduced diameter portion 76 of flange 70.

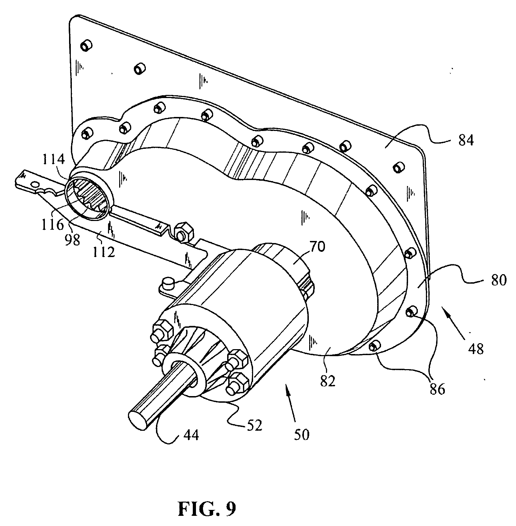

As shown in Figure 9, housing 80 further comprises planar second housing portion 84 which is attached to a first housing portion 82 by means of a plurality of 1/4 inch bolts 86 extending about the periphery of first housing portion 82. First and second housing portions 82, 84 may be stamped from sheet steel, and their interface may be sealed with a simple gasket or bead of a cured liquid sealant. Referring now to Figure 5, second housing portion 84 is provided with self-sealing bearing 87 which radially supports axle 46 and prevents leakage of grease from housing 80. Second housing portion 84 is attached to forward and aft brackets 38 and 40 by means of bolts as shown in Figures 1 and 3.

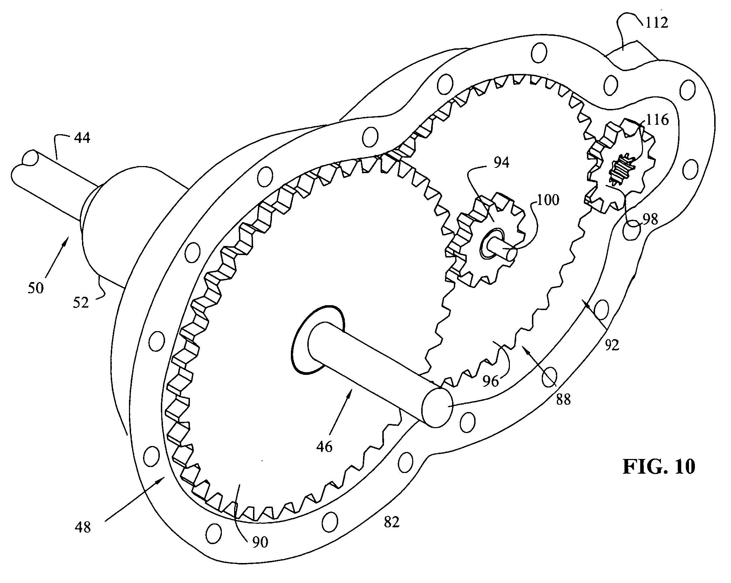

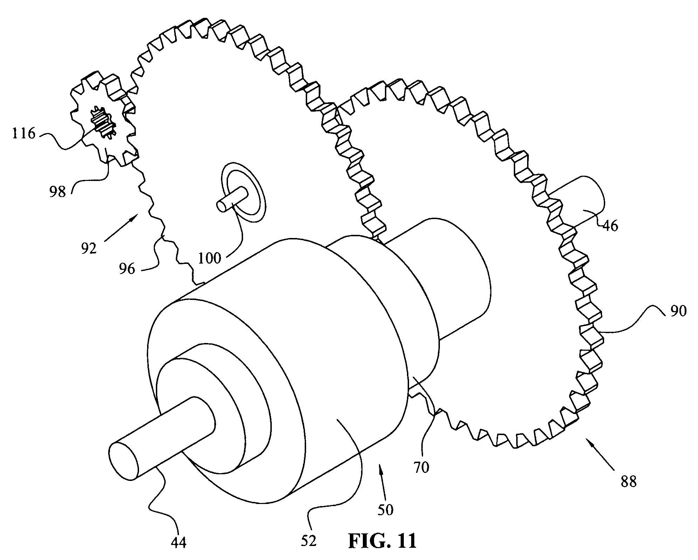

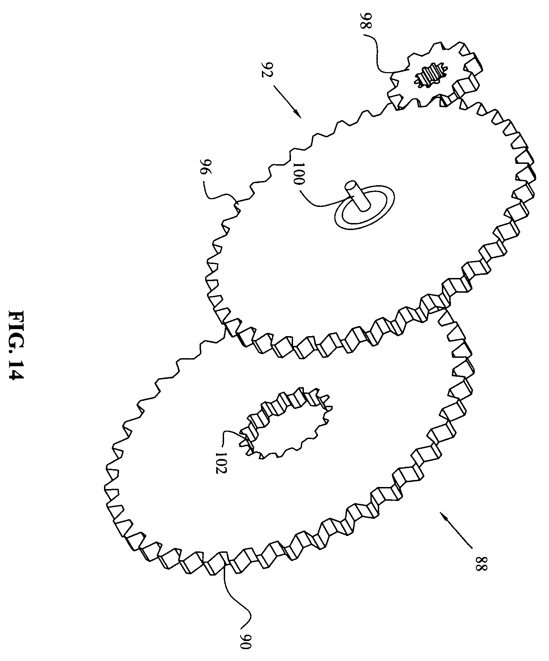

Axle drive unit 48 further comprises gear train 88, best shown in Figures 10, 11 and 14, disposed within grease-filled housing 80. Gear train 88 includes large diameter output gear 90, a compound idler gear 92 comprising integral small diameter gear portion 94 and large diameter gear portion 96, and small diameter input gear 98. As shown, large diameter output gear 90 is intermeshed with small diameter gear portion 94 of compound idler gear 92, and large diameter gear portion 96 of compound idler gear 92 is intermeshed with small diameter input gear 98. Compound idler gear 92 is rotatably disposed on the enlarged diameter, central portion of shouldered stud 100, which is provided with smaller diameter portions at its axially opposite ends. The smaller diameter portions of stud 100 extend through holes provided in first and second portions 82 and 84 of axle drive unit housing 80 and stud 100 is prevented from moving axially by its enlarged diameter portion abutting the interfacing surfaces of the housing portions. Referring to Figure 14, it can be seen that large diameter output gear 90 is provided with internal splines 102 which may be engaged with external splines 78 located on reduced diameter portion 76 of flange 70. Those of ordinary skill in the art will recognize that the gears of gear train 88 may at least partially be replaced by a sprocket and chain arrangement. Thus the term gear train as use herein should also be considered to include such a sprocket and chain configuration. Further, it should be apparent to one skilled in the art that rotation of input gear 98 will cause rotation of output gear 90, in the same direction, which would thereby cause rotation of flange 70 via external splines 78.

Referring now to Figures 4 and 5, transaxle 34 further comprises hydrostatic transmission module 104 which is of the type disclosed in the above-incorporated U.S. Patent No. 6,301,885 B1 and U.S. Patent Applications Serial Nos. 09/498,692 and 09/671,796. Hydrostatic transmission module 104 is driven through rotating input shaft 105 upon which are rotatably fixed pulley 106 and fan 108. Fan 108 directs cooling air onto the exterior of transmission module housing 110. Transmission module housing 110 is attached to axle gear drive unit 48 by means of bracket 112, which is best shown in Figure 9. Bracket 112, which may be a stamped sheet steel part, is secured to first portion 82 of axle drive unit housing 80 in any convenient manner, such as by tack welding. Referring now to Figure 3, transmission module housing 110 and bracket 112 are attached by two bolts. Further, a torque strap (not shown) may be provided between frame 22 and transmission module housing 110 to counteract any tendency for transmission module 104 to rotate about an axis parallel with the axles.

First portion 82 of axle drive unit housing 80 is provided with an opening, located adjacent gear train small diameter input gear 98, which forms external cylindrical collar 114, as best shown in Figure 9. Collar 114 is slip fitted over a cylindrical projection in transmission module housing 110 through which the output shaft of the hydrostatic transmission module 104 extends. As shown in Figures 9, 10 and 11, small diameter input gear 98 is provided with internal splines 116 which are engaged with external splines provided on the output shaft of the hydrostatic transmission module, thereby coupling hydrostatic transmission module 104 with gear train 88. Notably, instead of providing brake disk 45 on axle 44, and brake assembly 47 attached to bearing member 42 as shown, the output shaft of transmission module 104 may be extended completely through housing 80 and brake disk 45 may be provided at the free end thereof, and brake assembly 47 may be fixed to axle drive unit housing second portion 84.

As described in above-incorporated U.S. Patent Applications Serial Nos. 09/498,666, 09/498,692, and 09/671,796, hydrostatic transmission module 104 includes variable displacement axial piston pump and fixed displacement axial piston motor. The pump and motor fluidly communicate through a pair of conduits, with the rotational direction of both the motor and the hydrostatic transmission module's output shaft, being determined by which of these two conduits through which fluid flows from the pump to the motor. The speed at which the motor and output shaft rotate is controlled by varying the pump displacement. The conduit chosen for fluid flow from the pump to the motor, and the displacement of the pump, are controlled by manipulation of a pivotable swash plate assembly through rotatable control shaft 118 in a manner well known in the art. Control shaft 118 may be linked to a foot-operated pedal or hand operated control stick.

Further, in the event of a transmission failure, a first one of the left hand axle 44 or right hand axle 46 may be quickly disconnected from its respective ground engaging wheel 36, thereby allowing tractor 20 to be more easily pushed. The second of the axles 44 and 46, remains connected to its respective ground engaging wheel 36 causing the second axle to rotate in the same direction as the ground engaging wheels 36, and thereby causing the first axle to rotate in a direction opposite the ground engaging wheels 36 due to the differential. Disengagement of a ground engaging wheel 36 from its respective axle may be done by any suitable manner well known in the art.

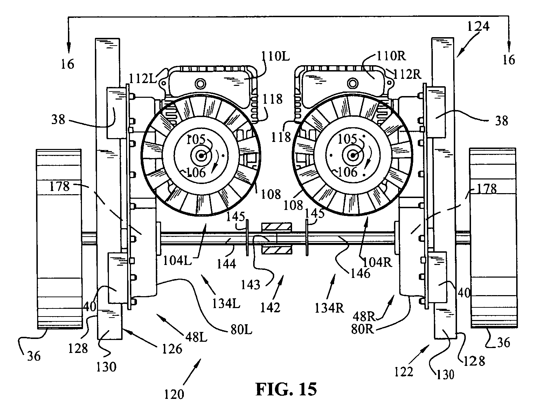

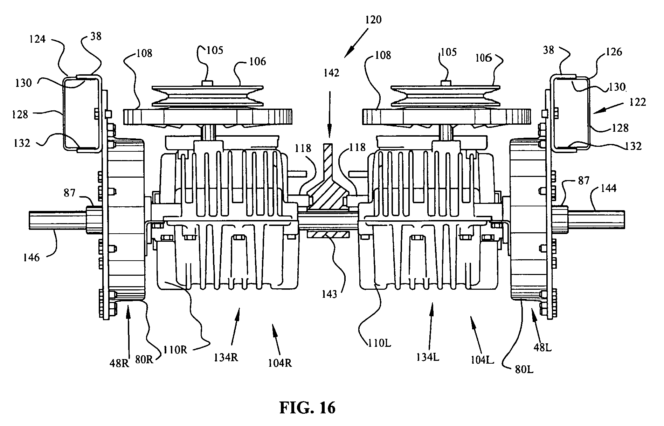

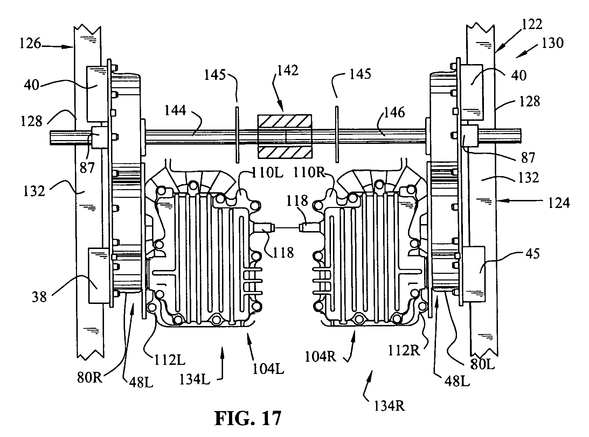

Referring now to Figures 15 through 17, a second embodiment of the present invention is shown. This embodiment provides a pair of transaxles according to the present invention for driving zero turn radius mower 120. Mower 120 includes frame 122 which comprises right hand frame rail 124 and left hand frame rail 126. Each of frame rails 124 and 126 is C-shaped and includes central web 128 and upper and lower flanges 130 and 132, respectively, which may be 5/32 inch thick sheet metal or plate steel. The zero turn mower 120 includes a pair of transaxle assemblies, 134L and 134R which are mirror images of one another. Moreover, except as described herein below, and most notably for not having a differential assembly, transaxle assembly 134R is substantially identical to above-described transaxle 34. All components are identified by a common reference numeral, however some include a left (L) and a right (R) hand designation indicating the components are mirror images of each other, with the right hand component most closely having the structure of its counterpart in the first embodiment of the transaxle, as described above. That is, the transaxles used in zero turn radius mower 120, particularly transaxle 134R, share several common components with the above-described transmission 34 of tractor 20.

Mirror image axle drive units 80R and 80L of transaxle assemblies 134R and 134L, respectively,are each bolted to forward and aft brackets 38 and 40, which are perhaps welded to each of left and right frame rails 124 and 126, in the manner described above. As noted above, zero turn radius mower 120 does not include a differential assembly, but rather is provided with bearing housing 142 which is fixed to frame 122 and has bearing 143 which rotatably supports the adjacent, abutting ends of left hand and right hand axles 144 and 146.

An end of the axles 144 and 146 are provided with a ground-engaging wheels 36 which are selectively driven in forward and reverse directions at varying speeds by means of the individual hydrostatic transmission modules 104L and 104R in the manner described above. As noted above, a torque strap (not shown) may be attached to each of transmission module housings 110L, 110R to counteract any tendency for modules 104L, 104R to rotate about an axis parallel with axles 144, 146.

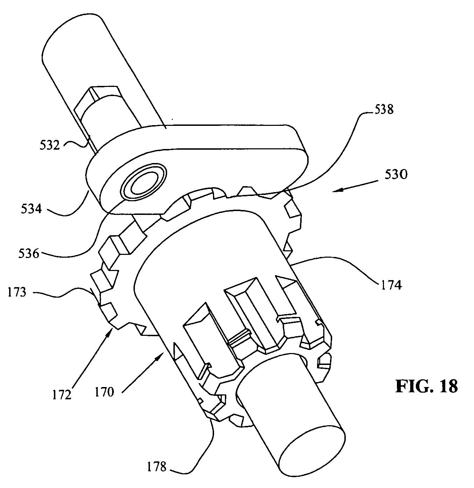

Axle drive units 48L and 48R each contain a geartrain 88 as described above, the output of each geartrain engaging splines 178 provided on the opposite end from the ground engaging wheels 36 on one of axles 144 and 146 for driving same. Splines 178 form a portion of driving flange 170, as is shown in Figure 18. Driving flange 170 is substantially similar to casing-driving flange 70 with the noticeably difference being the differences in annular portion 72 and annular portion 172. Additionally, no reduced diameter portion is present in driving flange 170, as is present in casing-driving flange 70, due to external splines 178 having a diameter equal to the diameter of central portion 174. In reference to the difference between annular portions, annular portion 172 includes a plurality of teeth 173.

Still referring now to Figure 18, parking brake mechanism 530R is shown. It should be noted that a second parking brake mechanism 530L may be utilized in conjunction with transaxle 134L. Parking brake mechanism 530 includes driving flange 170, braking rod 532, and braking lock 534. Braking lock 534 is provided with a mounting hole 536 and a plurality of recesses 538, with recesses 538 being mirrored opposites of teeth 173 on driving flange 170. Braking rod 532 is inserted into braking lock 534 through mounting hole 536 with a press fit or in a similar manner. The fit provides sufficient friction such that rotation of braking rod 532 causes rotational movement in braking lock 534. Braking rod 532 is mounted to the inner wall of housing 80 in a manner sufficient to allow rotation of braking rod 532 around its longitudinal axis creating a pivot for braking lock 534. When braking lock 534 is rotated downward sufficiently, recesses 538 engage teeth 173 preventing rotation of driving flange 170 about its longitudinal axis and thereby preventing rotation of axle upon which driving flange 170 is affixed. As braking lock 534 prevents rotation of the axle the rotation of ground engaging wheels 36 is also prevented, thereby preventing movement of mower, unless ground engaging wheels 36 are disconnected from axle as is provided above. Any actuation mechanism well known in the art may be employed to control the rotation of braking rod 532 and hold braking lock 534 in either an open position away from driving flange 170, or a closed position against annular portion 172 such that teeth 173 are engaged and rotation of ground engaging wheels 36 is prevented.

As is known to one skilled in the art, an alternative braking mechanism may be employed substantially similar to the braking means disclosed above utilizing brake discs. The brake discs may be fixed to the axles with the braking mechanism being fixed to either first housing portion or second housing portion of either transaxle.

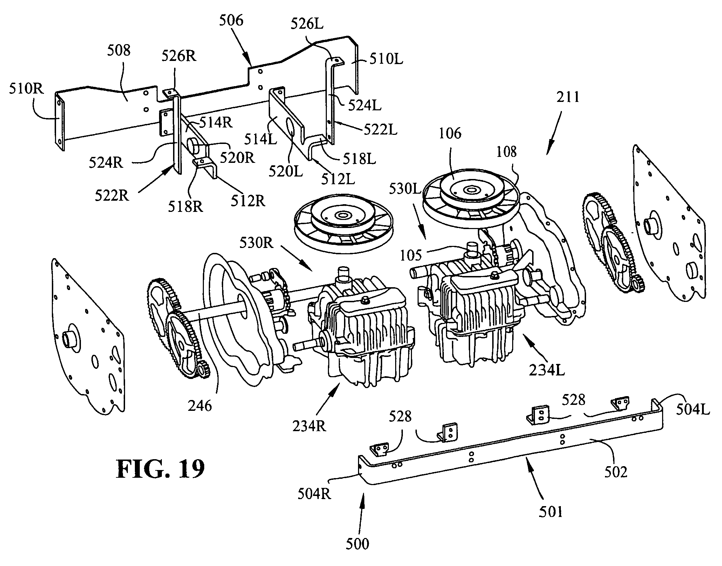

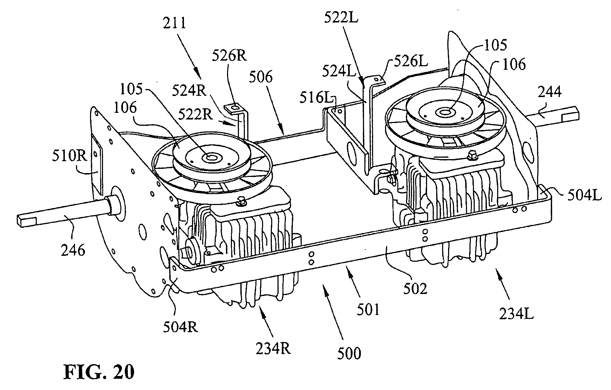

Referring now to Figures 19 through 20, a third embodiment of the present invention is shown. This embodiment provides for a pair of transaxles 234L and 234R, according to the present invention, assembled as a transaxle module assembly 211 as an independent unit for installation upon a zero turn radius mower (not shown). Many components of the transaxle assemblies 234L and 234R are substantially identical to the above-described components of transaxles 134L and 134R, with the sole difference in this embodiment being mounting frame 500, described below, and shortened axles 244 and 246. Shortened axles 244 and 246 communicate with mounting frame 500 for additional support increasing the robustness of the design, in the manner described below. Additionally, in the following description, the left (L) and right (R) hand designations indicating components are mirror images of each other, as above.

Transaxle module 211 includes left and right hand transaxle assemblies, 234L and 234R respectively, and a mounting frame 500. Mounting frame 500 is comprised of a front frame portion 501, a rear frame portion 506, left hand and right hand perpendicular extension 512L and 512R respectively, and left and right hand upward frames 522L and 522R respectively.

Front frame portion 501 is substantially C-shaped and includes front web portion 502 and left and right front hinge portions 504L and 504R respectively, with left hand front hinge portion 504L extending perpendicularly from an end of front web portion 508 and a right hand front hinge portion 504R extending perpendicularly from the opposite end of the front web portion 508 , with the front hinge portions 504L and 504R being substantially parallel to one another. Rear frame portion 506 is also C-shaped and includes rear web portion 508, and left hand and right hand rear hinge portion 510L and 510R respectively. The rear hinge portions 510L and 510R each extend perpendicularly from a separate end of the rear web portion 508 such that the hinge portions 510L and 510R are substantially parallel.

Front frame portion 501 may be attached to left and right hand housing portions 84L and 84R respectively, in any manner convenient and well known in the art, such as bolting or welding, for example, by the attachment of the left hand hinge portion 504L to the left hand second housing portion 84L and attachment of the right hand hinge portion 504R to the right hand second housing portion 84R. Further, the rear frame portion 506 is attached to the second housing portions 84L and 84R in a similar manner. Left hand rear hinge portion 510L is attached to left hand second housing portion 84L opposite left hand front hinge portion 504L, via any manner well known in the art, such as bolting or welding. Right hand rear hinge portion 510R is attached to right hand second housing portion 84R in a substantially similar manner.

Further, bolted to web portion 502 of front frame portion 501 may be a plurality of support members 528 each being capable of being bolted to left hand and right hand transaxle assembly 234L and 234R in an effort to provide support stabilizing vertical movement of transaxle assembly ensuring drive belts (not shown) remain attached to rotatably fixed pulley 106 of each transaxle assembly 234L and 234R.

Extending between rear web portion 508 and left hand or right hand transaxle assembly 234L and 234R, respectively, is left hand and right hand extensions, 512L and 512R respectively, which are substantially parallel to one another and may be attached in any manner well known in the art. As left hand extension 512L and right hand extension 512R are mirror images of each other, only left hand extension 512L will be described henceforth. It should be apparently to one skilled in the art that right hand extension 512R performs substantially the same function in regards to right hand transaxle assembly 234R. Left hand extensions 512L includes body portion 514L, rearward mounting portion 516L, assembly mounting portion 518L, and axle guide hole 520L. Rearward mounting portion 516L extends perpendicularly away from one end of body portion 514L and bolts to the rear web portion 508 of rear frame portion 506. Assembly mounting portion 518L extends from the end of the body portion 514L opposite the end from which rearward mounting portion 516L extends, and is bolted to the transaxle assembly 234L in order to provide support and stability.

Axle guide hole 520L located within body portion 514L. A guide bearing (not shown) may be pressed or inserted into the axle guide hole 520L. Shortened left hand axle 244 is then located within the inner smooth bore of guide bearing, which in turn supports shortened left hand axle 244 and allows for a decreased frictional rotation of shortened left hand axle 244 as it rotates. The support provided by axle guide hole 520L and guide bearing contained therein, helps to offset any lateral force asserted upon shortened left hand axle 244 due to the weight of the mower.

Upright frame member 522L is fixed left hand extension 512L in any manner well known in the art, including welding or bolting with a plurality of bolts. Upright frame member 522L includes vertical body 524L and mounting appendage 526L. Vertical body 524L is the portion of upright frame member 522L fixed to extension 512L securing the entire upright frame member 522L in a substantially vertical position. Mounting appendage 526L extends perpendicularly from the end of the vertical body 524L orientated away from extension 512L and is bolted to the mower, upon assembly of the transaxle module assembly 211, in an effort to provide support to the extension 512L and thereby providing additional support to shortened left hand axle 244.

As is apparent to one skilled in the art, transaxle module assembly 211 may be assembled by the manufacturer at a facility separate from the facility in which the final mower assembly takes place. Transaxle module assembly 211 may then be shipped to the final mower assembly plant for installation upon a mower frame. Additionally, in the event of a failure with transmission module assembly 211, the entire assembly may be easily removed and replaced, decreasing both repair time and downtime of mower.

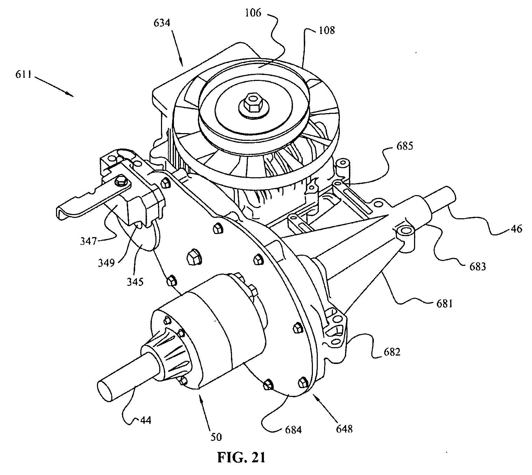

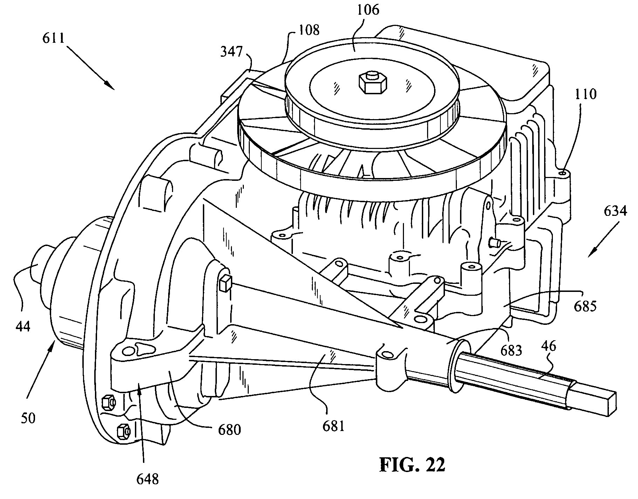

A fourth embodiment of the present invention is shown in Figures 21 and 22. This fourth embodiment of the present invention provides for a transaxle module assembly 611 comprising transaxle 634, which is substantially similar to transaxle 34 discussed above. Transaxle module assembly represents an assembly similar to transaxle module assembly 211, in that, transaxle module assembly 611 may be assembled separate from the mower, and affixed to the mower at a later time. Further, transaxle module assembly is also more easily removed from said mower than the integrated assembly set forth in the first embodiment, thereby being easier to replace in the unlikely event of transmission failure. As assembly and many of the components being utilized in transaxle module assembly 611 are substantially similar to that disclosed above in relation to the first embodiment, as is readily apparent to one skilled in the art, only the differences between the first and the fourth embodiment will be described below.

Transaxle module assembly 611 comprises a transmission module 104L, an axle drive unit 648, and a differential assembly 50. Transmission module 104L and differential assembly 50 are substantially similar to those disclosed in the first embodiment of the present invention, the sole difference being transmission module 104L being a mirror image of its counter-part disclosed above, transmission module 104, and likewise being substantially similar to transmission module 204L.

Axle drive unit 684 comprises gear train 88, second housing portion 82, and modified first housing portion 682. Gear train 88 and second housing portion 82 remain unchanged from that disclosed above. Modified first housing portion 684 includes support webs 681 and extended axle support 683 in an effort to provide support to axle 46. In this fourth embodiment, a support frame similar to bearing member 42, discussed above, is absent thereby reducing support upon axle 46. Support provided by support webs 681 and extended axle support 683 helps to stabilize axle 46 and increases of the operation of the mower and the smoothness of the ride. Additionally, housing connectors 685 may be attached to transmission housing 110 in an effort to further stabilize and support axle 46.

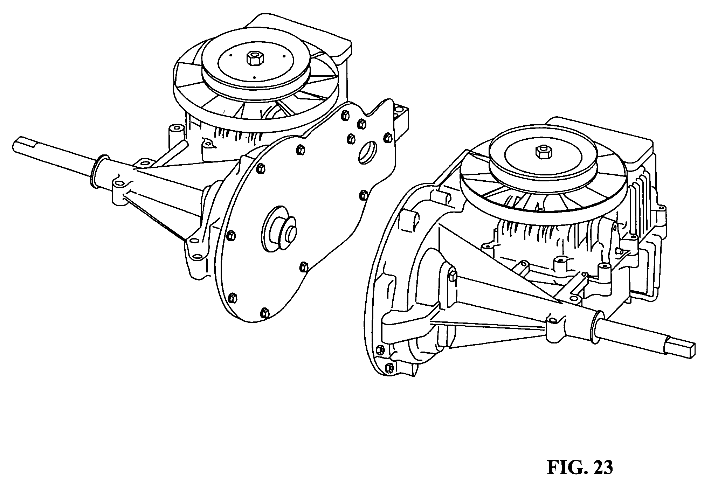

As support webs 681 and extended axle support 683 extend from modified first housing portion 684, differential 50 engages gear train 88 through second housing portion 82. Differential 50 functions in substantially the same manner as described above, with only the location relative to second housing portion 82 being reversed. It should be readily apparent to one skilled in the art that modified first housing portion 684 may be substituted for first housing portion 86 on either the second or third embodiment of the present invention as is shown in Figure 23. As no differential is present in either embodiment, support webs 681 and extended axle support 683 may extend opposite second housing portion with no interference to any components.

Further, as shown in Figure 21, output shaft 349 extends through second housing portion 82 with brake disc 45 being mounted thereto. Braking assembly 47 is attached to second housing portion 82 functioning in a manner similar to that described above whereby braking assembly applies friction to brake disc 45, reducing rotation thereof, and consequently reducing rotation of output shaft 349 as opposed to reducing rotation of axle 44 directly. Reduced rotation of output shaft 349 thereby reduces rotation of the gear train 82, slowing rotation of differential 50 and the axles, 44 and 46, extending therefrom, slowing the movement of the mower.

While this invention has been described as having exemplary designs, the present invention may be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains.

## Claims

1. A hydrostatic transmission assembly 20 comprising a first hydrostatic transmission module 104 including a rotating fluid pump (not shown) and a rotatable fluid motor (not shown), said fluid pump being of variable displacement; a first axle drive unit 48 comprising a drive means 88 having an input 113 and an output 102, and a plurality of axles including a first axle 44 extending through said first axle drive unit; **characterized in that** said first axle drive unit further comprises a housing 80 and said first hydrostatic transmission module further comprises a transmission housing 110, said input and said output being disposed in said transmission housing, said first hydrostatic axle drive unit being separate modules.

2. The hydrostatic transmission assembly as set forth in claim 1 further **characterized in that** said hydrostatic transmission assembly further includes a second hydrostatic transmission module 104R, a second axle drive unit 48R, and a second axle 146 extending through a second drive unit housing 80R.

3. The hydrostatic transmission assembly as set forth in claim 1 further **characterized in that** said hydrostatic transmission assembly further includes a differential assembly 50 having a rotating casing 52, said rotating casing being external to said transmission housing and said axle drive unit housing.

4. The hydrostatic transmission assembly as set forth in claim 2 or 3 further **characterized in that** said hydrostatic module further includes a transmission frame 500, said hydrostatic transmission assembly being mounted to said transmission frame, said transmission frame easily fixable to and removable from a mower (not shown).

5. The hydrostatic transmission assembly as set forth in claim 4 further **characterized by** said drive means 88 being a speed reduction gear train including a plurality of intermeshed gears 94, 96, 98 having various sizes.

6. The hydrostatic transmission assembly as set forth in claim 5 further **characterized by** said first transmission module further comprising a first output shaft 61 having a plurality of external splines 63, whereby said first output shaft engages said input of said first axle drive unit.

7. The hydrostatic transmission assembly as set forth in claim 6 further **characterized by** said second transmission module further comprising a second output shaft 161L having a plurality of external splines 163R, whereby said second output shaft engages said input of said second axle drive unit.

8. The hydrostatic transmission assembly as set forth in claims 6 or 7 further **characterized by** said speed reduction gear train further comprising an input gear 98 having a plurality of internal splines 102, whereby said internal splines engage said external splines of said output shaft.

9. The hydrostatic transmission assembly as set forth in claim 8 further **characterized by** said hydrostatic transmission assembly further including a first input shaft 105, a first fan 108, and a first pulley 106, said first fan and said first pulley being fixedly mounted to said first input shaft, said first pulley being in communication with a motor (not shown) of said mower, whereby said motor initiates said first pulley to rotate thereby causing rotation of said first input shaft, said first fan being rotated due to rotation of said first input shaft; said first fan cooling said transmission assembly.

10. The hydrostatic transmission assembly as set forth in claim 9 further **characterized by** said hydrostatic transmission assembly further including a second input shaft 105R, a second fan 108R, and a second pulley 106R, said second fan and said second pulley being fixedly mounted to said second input shaft, said second pulley being in communication with said motor whereby said motor initiates said second pulley to rotate thereby causing rotation of said second input shaft, said fan being rotated due to rotation of said first input shaft; said first fan cooling said transmission assembly.

11. The hydrostatic transmission assembly as set forth in claim 9 further **characterized by** said hydrostatic transmission assembly further including a brake disc 45 and a brake actuating means 47, said brake actuating means being fixed to said axle drive unit housing and said brake disc being affixed to said output shaft whereby said brake actuating means may frictionally slow rotation of said brake disc, thereby slowing rotation of said output shaft.

12. The hydrostatic transmission assembly as set forth in claim 10 further **characterized by** said hydrostatic transmission assembly further including a first braking means 530L and a second braking means 530R said first braking means being operatively coupled to said first drive unit housing, said second braking means being operatively coupled to said second drive unit housing, whereby engagement of said braking means prevents rotation of said axle engaged with said drive unit housing.

13. The hydrostatic transmission assembly as set forth in claim 4 further **characterized by** said plurality of axles being coupled together within said differential assembly.

14. The hydrostatic transmission assembly as set forth in claim 3 further **characterized by** said hydrostatic transmission assembly further including a plurality of guide bearings, said guide bearings being fixed to said transaxle frame and supporting said plurality of axles while allowing rotation of said axles.

15. The hydrostatic transmission assembly as set forth in claims 1, 2, or 14 further **characterized by** a plurality of ground engaging wheels 36 operatively coupled to said plurality of axles.

16. The hydrostatic transmission assembly as set forth in claims 1 or 2 further **characterized by** said first housing portion comprising a plurality of support webs 681 and an extended axle support 683, said web supports and said axle support operating in conjunction to provide support to said axle.
